# EUROPÄISCHE PATENTSCHRIFT

(11) **EP 2 652 818 B1**
(45) Veröffentlichungstag und Bekanntmachung des Hinweises auf die Patenterteilung: **27.01.2016**
(21) Anmeldenummer: 11788117.7
(22) Anmeldetag: 22.11.2011
(51) Int. Cl.: H01M 2/22, H01M 10/0525, H01M 4/66

(54) **LITHIUM-IONEN-ZELLE, LITHIUM-IONEN-AKKUMULATOR SOWIE KRAFTFAHRZEUG MIT EINEM LITHIUM-IONEN-AKKUMULATOR**
LITHIUM-ION CELL, LITHIUM-ION RECHARGEABLE BATTERY AND MOTOR VEHICLE WITH A LITHIUM-ION RECHARGEABLE BATTERY
PILE LITHIUM-ION, ACCUMULATEUR LITHIUM-ION ET VÉHICULE AUTOMOBILE DOTÉ D'UN ACCUMULATEUR LITHIUM-ION

(30) Priorität: 13.12.2010 DE 102010062873
(43) Veröffentlichungstag der Anmeldung: 23.10.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: LEUTHNER, Stephan, 71229 Leonberg (DE); WOEHRLE, Thomas, 80807 München (DE); FINK, Holger, 70567 Stuttgart (DE); FETZER, Joachim, 73342 Bad-Ditzenbach (DE)
(74) Vertreter: Bee, Joachim
(86) Internationale Anmeldenummer: PCT/EP2011/070639
(87) Internationale Veröffentlichungsnummer: WO 2012/079921

(56) Entgegenhaltungen:
- EP-A1- 0 690 517
- CN-A- 101 383 407
- DATABASE WPI Week 201107 Thomson Scientific, London, GB; AN 2010-Q51162 XP002669650, -& KR 2010 0127983 A (YANG J S) 7. Dezember 2010 (2010-12-07)

## Beschreibung

Die vorliegende Erfindung betrifft eine Lithium-Ionen-Zelle, einen Lithium-Ionen-Akkumulator mit mindestens zwei Lithium-Ionen-Zellen sowie ein Kraftfahrzeug mit einem elektrischen Antriebsmotor zum Antreiben des Kraftfahrzeugs und einen mit dem elektrischen Antriebsmotor verbundenen oder verbindbaren Lithium-Ionen-Akkumulator.

### Stand der Technik

Lithium-Ionen-Zellen besitzen mindestens eine positive und eine negative Elektrode (Kathode bzw. Anode), die Lithium-Ionen (Li+) reversibel ein-(Interkalation) oder wieder auslagern (Deinterkalation) kann. Die Begriffe Lithium-Ionen-Zelle, Lithium-Ionen-Polymer-Zelle, Lithium-lonen-Zelle, -Batterie, -Akkumulator und -System werden weitgehend synonym benutzt.

An Lithium-Ionen-Akkumulatoren werden hohe Anforderungen, insbesondere im automotiven Bereich bezüglich der gravimetrischen Energiedichte (angegeben in Wh/kg) gestellt, um beispielsweise möglicht hohe Reichweiten von mit Elektromotoren angetriebenen Fahrzeugen zu erzielen. Die Nenn-Kapazität einer Lithium-Ionen-Zelle wird von den sogenannten Aktivmaterialien, beispielsweise lithiierte Übergangs-Metalloxide wie Lithium-Nickel-Oxid (LiNiO₂) in der positiven Elektrode und Graphite bzw. Kohlenstoffe in der negativen Elektrode, bestimmt. Allerdings sind in jeder Lithium-Ionen-Zelle noch sogenannte Passivmaterialien oder "Totmaterialien" vorhanden, die damit Einfluss auf die Energiedichte der Lithium-Ionen-Zelle haben. Dazu gehören beispielsweise elektrisches Leitmaterial, Elektrodenbinder, Separatoren, Ableiterfolien, Kollektoren, Terminals und das Gehäuse der Zelle bzw. des Akkumulators selbst.

Ableiterfolien dienen dazu, die positive und negative Elektrode elektrisch zu kontaktieren und anzubinden, wobei mittels der Kollektoren die Kontaktierung mit den Terminals gegeben ist.

Der Aufbau einer Lithium-Ionen-Zelle mit Ableitern, Kollektoren und den äußeren Terminals ist beispielhaft in der US20080107961A1 beschrieben.

Üblicherweise werden in Lithium-Ionen-Zellen für die positive Elektrodenseite aluminiumbasierte Ableiterfolien, Kollektoren und Terminals verwendet. Auf der negativen Elektrodenseite wird Kupfer, Nickel oder vernickeltes Kupfer eingesetzt, da es bei Verwendung von Aluminium auf der negativen Seite aufgrund des gegebenen Potentials sonst zur Legierung von Lithium und Aluminium kommen würde.

Aus der Verwendung von Kupfer bzw. Nickel als passives Material in einer Lithium-Ionen-Zelle resultieren höhere Herstellungskosten. Zudem werden damit passive Materialien verwendet, die eine höhere kristallographische Dichte im Vergleich zu Aluminium besitzt. So weist Aluminium eine Dichte von 2,7 g/cm³ und Kupfer sowie Nickel eine von 8,9 g/cm³ auf. Dementsprechend hat die Verwendung von Kupfer bzw. Nickel als Materialien in Lithium-Ionen-Akkumulatoren einen negativen Einfluss auf die gravimetrische Energiedichte.

In der CN 101 383 407 A wird ein negativer Ableiter aus Aluminium einer Lithium-Ionen-Batterie beschrieben, der mit einer Nickelschicht versehen. KR 2010 0127983 A offenbart einen Kollektor eines Akkumulators aus einer Aluminiumfolie, die beidseitig mit einer Kupferschicht versehen ist. EP 0 690 517 A1 zeigt ebenfalls einen Lithium-Ionen-Akkumulator, der über eine Anode aus Aluminium mit beidseitiger Kupferschicht verfügt.

### Offenbarung der Erfindung

Erfindungsgemäß wird eine gewichtsreduzierte Lithium-Ionen-Zelle zur Verfügung gestellt, die über eine aluminiumbasierte Ableiterfolie sowie einen aluminiumbasierten Kollektor für die negative Elektrodenseite verfügt, wobei die Ableiterfolie und der Kollektor beidseitig bzw. zumindest teilweise mit einer metallischen Schicht versehen ist, die während des Betriebes der Lithium-Ionen-Zelle eine Legierung von Ableiterfolie und Kollektor mit Lithium-Ionen unterbindet wobei die metallische Schichten der Ableiterfolie mittels Walzplattieren aufgebracht ist. Die metallische Schicht besteht aus Kupfer oder aus Nickel.

Vorzugsweise wird bei der Herstellung der erfindungsgemäßen Ableiterfolie nicht von einer üblichen Ableiterfolie aus Aluminium für die positive Seite ausgegangen, sondern es werden dünnere Aluminiumfolien verwendet, so dass nach der beidseitigen Beschichtung mit Kupfer oder Nickel, wobei vorzugsweise auch die Kanten der Ableiterfolie beschichtet werden, eine übliche Dicke von ca. 12 µm erhalten wird. Beispielsweise können die Kupferschichten jeweils 1 µm stark sein, so dass die Dicke des Aluminiumkerns 10 µm beträgt. Andere Dimensionierungen der Schichten bzw. der Gesamtdicke der Ableiterfolie sind natürlich möglich, wobei die außen liegenden Schichten möglichst dünn sein sollten. So wird bei gleicher Foliendicke ein geringeres Gewicht erreicht, als bei einer üblicherweise verwendeten Kupferfolie.

Die metallische Schicht aus Kupfer oder Nickel kann den Kollektor auch nur im Bereich der von der Elektrode kontaktiert wird vorgesehen sein. Bevorzugt ist eine darüber hinausgehende oder vollständige Beschichtung des Kollektors.

Zur Vereinfachung von Fertigungsprozessen wird der Kollektor vollständig mit der metallischen Schicht zu umgeben.

Vorzugsweise wird bei der Herstellung des erfindungsgemäßen Kollektors nicht von einem üblichen Kollektor für die positive Elektrodenseite aus Aluminium ausgegangen, sondern es werden Werkstücke mit einer geringeren Materialstärke verwendet, so dass erst nach der Beschichtung mit Kupfer oder Nickel eine übliche Dicke von ca. 1-5 mm erhalten wird.

Beispielsweise kann die Kupfer- oder Nickelschicht 5 µm stark sein und die des Aluminiumkerns 1000 µm.

Andere Dimensionierungen der Schichten bzw. der Gesamtdicke des Kollektors sind natürlich möglich, wobei die metallische Schicht möglichst dünn sein sollte. So wird bei gleicher Dimensionierung des Kollektors ein geringeres Gewicht als nach dem Stand der Technik erreicht.

Damit werden ein Kollektor und eine Ableiterfolie erhalten, die vorteilhafterweise bei gleichem Volumen ein geringeres Gewicht haben, als herkömmliche Kupfer- oder Nickel-basierte Bauteile, so dass eine deutlich gewichtsoptimierte Lithium-Ionen-Zelle mit einer erhöhten Energiedichte erhalten wird.

Die Gewichtsvorteile des Aluminiums können damit in einer Lithium-Ionen-Zelle nicht nur für die positive Elektrode, sondern auch für die negative Elektrodenseite nutzbar gemacht und gleichzeitig der Nachteil der Legierung durch Lithium vermieden werden.

Die Ableiterfolie und der Kollektor für die erfindungsgemäße Lithium-Ionen-Zelle werden konfektioniert durch das Aufbringen einer dünnen Kupferfolie bzw. Schicht auf die Aluminiumfolie bzw. das Aluminiumwerkstück. Alternativ kann auch Nickel für die Oberflächenveredelung verwendet werden.

Das Aufbringen der dünnen Schichten aus Kupfer oder Nickel auf den Kollektor erfolgt vorzugsweise entweder
a) galvanisch,
b) durch Walzplattieren oder
c) mittels lonenstrahlbeschichtung.

Bei allen Verfahren ist zu gewährleisten, dass die aufgebrachte Schicht keinerlei Defekte aufweist, da es sonst doch zur Einlagerung von Lithium in den Aluminiumkern des Kollektors kommt.

Überraschenderweise sind die gewichtsreduzierten Bauteile für die negative Elektrodenseite und damit die erfindungsgemäße Lithium-Ionen-Zelle langzeitstabil. Zudem zeigt die Lithium-Ionen-Zelle eine gleiche elektrische Performance und ein identisches Verhalten bei Langzeit-Zyklisierung und - Lagerung bei bis zu 60°C sogar im vollgeladenen Zustand wie eine Referenzzelle mit einem herkömmlichen Bauteil aus Kupfer oder Nickel.

Überraschend waren die Eigenschaften des erfindungsgemäßen Kollektors u.a., da eine Ablösung der Kupfer- oder Nickelschicht von dem Aluminiumwerkstück während des Lagerns oder des Betreibens aufgrund einer Elektrolytunbeständigkeit oder durch in Spuren vorhandenen Fluorwasserstoffs (HF) der Zellen a priori nicht auszuschließen gewesen war. Dies wäre für die elektrochemische Performance der Lithium-Ionen-Zelle sehr nachteilig gewesen.

Besonders bevorzugt sind Lithium-Ionen-Zellen mit einem erfindungsgemäßen Kollektor, der mittels Ionenstrahlbeschichtung oberflächenveredelt wurde, und mit Ableiterfolien, die mittels Walzplattieren hergestellt wurden. Lithium-Ionen-Zellen mit einem Kollektor der mittels Ionenstrahlbeschichtung oberflächenveredelt wurde, und mit Ableiterfolien, die mittels Walzplattieren oder Ionenstrahlbeschichtung hergestellt wurden, haben in den vorab genannten Vergleichsversuchen die besten Ergebnisse erzielt.

Gegenstand der vorliegenden Erfindung sind auch ein Lithium-Ionen-Akkumulator mit mindestens zwei vorab beschriebenen Lithium-Ionen-Zellen sowie ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator.

Vorteilhafte Weiterbildungen der Erfindung sind in den Unteransprüchen angegeben und in der Beschreibung beschrieben.

### Zeichnungen

Ausführungsbeispiele der Erfindung werden anhand von Zeichnungen und der nachfolgenden Beschreibung näher erläutert. Es zeigen
Figur 1 in einer perspektivischen Ansicht ein Kollektor für die negative Elektrode einer erfindungsgemäßen Lithium-Ionen-Zelle mit einer üblichen räumlichen Ausgestaltung gemäß des Standes der Technik (US 20080107961A1),
Figur 2 in einer geschnittenen Seitenansicht der Kollektor gemäß Figur 1, und
Figur 3 in einer geschnittenen Seitenansicht eine Ableiterfolie für die negative Elektrode einer erfindungsgemäßen Lithium-Ionen-Zelle.

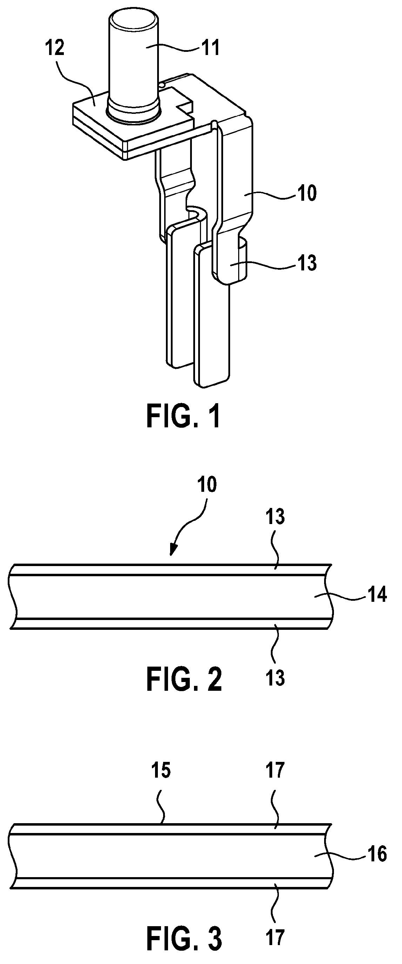

In Figur 1 ist ein Kollektor 10 für eine nicht dargestellte erfindungsgemäße Lithium-Ionen-Zelle dargestellt, der mit einem Terminal 11, das einen Sockel 12 aufweist, verbunden ist. Der Kollektor 10 ist mit einer metallischen Schicht 13 aus Kupfer oder Nickel umgeben und weist einen Kern aus einem Aluminiumwerkstück 14 auf. Zur Verdeutlichung des Aufbaus ist in Figur 2 ein Schnitt durch den Kollektor 10 gezeigt, wobei das Aluminiumwerkstück 14 von der metallischen Schicht 13 bedeckt ist, die in Relation zum Aluminiumwerkstück 14 zur Gewichtsoptimierung sehr dünn ist. In Figur 3 ist der Aufbau einer Ableiterfolie 15 für gezeigt. Die Ableiterfolie 15 besitzt einen Kern aus einer Aluminiumfolie 16, die auf beiden Seiten von einer metallischen Schicht 17 bedeckt ist. Die metallischen Schichten 17 verhindern, wie die metallische Schicht 13 bei dem Kollektor gemäß den Figuren 1 und 2, dass während des Betriebes der Lithium-lonen-Zelle Lithium die Aluminiumfolie 16 legiert. Die Schicht 17 besteht aus Kupfer oder Nickel. Da mit der erfindungsgemäßen Ableiterfolie 15 eine gewichtsoptimierte Ableiterfolie 15 erhalten werden soll, ist die Dimensionierung der Aluminiumfolie 16 und der beiden Schichten 17 entsprechend zu bemessen, d.h. die Schichten 17 sind möglicht dünn ausgeführt.

## Patentansprüche

1. Eine Lithium-Ionen-Zelle Ableiterfolien und Kollektoren aufweisend, **dadurch gekennzeichnet, dass** die Ableiterfolie (15) für eine negative Elektrode der Lithium-Ionen-Zelle aus einer Aluminiumfolie (16) besteht, die beidseitig oder vollständig mit einer metallischen Schicht (17) bedeckt ist, die aus Kupfer oder Nickel besteht, und dass der Kollektor (10) für die negative Elektrode aus einem Aluminiumwerkstück (14) besteht, das zumindest im Kontaktbereich mit der negativen Elektrode der Lithium-Ionen-Zelle mit einer metallischen Schicht (13) bedeckt ist, die aus Kupfer oder Nickel besteht; wobei die metallische Schicht (17) der Ableiterfolie (15) mittels Walzplattieren aufgebracht ist.

2. Die Lithium-Ionen-Zelle nach Anspruch 1, wobei der Kollektor (10) vollständig von der metallischen Schicht (13) umgeben ist.

3. Die Lithium-Ionen-Zelle nach Anspruch 1 oder 2, wobei die metallische Schicht (13) des Kollektors (10) galvanisch aufgebracht ist.

4. Die Lithium-Ionen-Zelle nach Anspruch 1 oder 2, wobei die metallische Schicht (13) des Kollektors (10) mittels Walzplattieren aufgebracht ist.

5. Die Lithium-Ionen-Zelle nach Anspruch 1 oder 2, wobei die metallische Schicht (13) des Kollektors (10) mittels Ionenstrahlbeschichtung aufgebracht ist.

6. Ein Lithium-Ionen-Akkumulator mit mindestens zwei Lithium-Ionen-Zellen nach einem der Ansprüche 1 bis 5.

7. Ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator gemäß Anspruch 6.

## Claims

1. Lithium-ion cell having outgoing conductor foils and collectors, **characterized in that** the outgoing conductor foil (15) for a negative electrode of the lithium-ion cell consists of an aluminum foil (16), which is covered on both sides or completely with a metallic layer (17) that consists of copper or nickel, and **in that** the collector (10) for the negative electrode consists of an aluminum workpiece (14), which is covered, at least in the contact region with the negative electrode of the lithium-ion cell, with a metallic layer (13) that consists of copper or nickel; the metallic layer (17) of the outgoing conductor foil (15) being applied by means of roll-bonded cladding.

2. Lithium-ion cell according to Claim 1, the collector (10) being completely surrounded by the metallic layer (13).

3. Lithium-ion cell according to Claim 1 or 2, the metallic layer (13) of the collector (10) being applied galvanically.

4. Lithium-ion cell according to Claim 1 or 2, the metallic layer (13) of the collector (10) being applied by means of roll-bonded cladding.

5. Lithium-ion cell according to Claim 1 or 2, the metallic layer (13) of the collector (10) being applied by means of ion beam deposition.

6. Lithium-ion rechargeable battery with at least two lithium-ion cells according to one of Claims 1 to 5.

7. Motor vehicle with an electrical drive motor for driving the motor vehicle and a lithium-ion rechargeable battery according to Claim 6 that is connected or can be connected to the electrical drive motor.
/

## Revendications

1. Cellule à ions lithium présentant des feuilles d'évacuation et des collecteurs,
**caractérisée en ce que**
la feuille d'évacuation (15) pour électrode négative de la cellule à ions lithium est constituée d'une feuille d'aluminium (16) recouverte sur ses deux faces ou totalement d'une couche métallique (17) constituée de cuivre ou de nickel,
**en ce que** le collecteur (10) prévu pour l'électrode négative est constitué d'une pièce (14) en aluminium qui est recouverte au moins dans sa partie en contact avec l'électrode négative de la cellule à ions lithium d'une couche métallique (13) constituée de cuivre ou de nickel et
**en ce que** la couche métallique (17) de la feuille d'évacuation (15) sont appliquée par placage au cylindre.

2. Cellule à ions lithium selon la revendication 1, dans laquelle le collecteur (10) est entièrement entouré par la couche métallique (13).

3. Cellule à ions lithium selon les revendications 1 ou 2, dans laquelle la couche métallique (13) du collecteur (10) est appliquée par voie galvanique.

4. Cellule à ions lithium selon les revendications 1 ou 2, dans laquelle la couche métallique (13) du collecteur (10) est appliquée par placage au cylindre.

5. Cellule à ions lithium selon les revendications 1 ou 2, dans laquelle la couche métallique (13) du collecteur (10) est appliquée par revêtement par faisceau d'ions.

6. Accumulateur à ions lithium présentant au moins deux cellules à ions lithium selon l'une des revendications 1 à 5.

7. Véhicule automobile doté d'un moteur électrique d'entraînement qui entraîne le véhicule automobile et d'un accumulateur à ions lithium selon la revendication 6, raccordé ou apte à être raccordé au moteur électrique d'entraînement.
